# FASCICULE DE BREVET EUROPEEN

(11) **EP 4 306 836 B1**
(45) Date de publication et mention de la délivrance du brevet: **04.03.2026**
(21) Numéro de dépôt: 23184961.3
(22) Date de dépôt: 12.07.2023
(51) Int. Cl.: F16L 27/087, B63B 21/50, E21B 17/05, E21B 43/01, F16J 15/00, F16J 15/46, F16L 27/093, F16C 19/36, F16C 33/72, F16C 33/76, F16J 15/3236, F16J 15/34

(54) **DISPOSITIF JOINT TOURNANT D'UNE INSTALLATION D'EXPLOITATION DE FLUIDES, NOTAMMENT SUR UNE PLATEFORME OFFSHORE, ET UNE TELLE INSTALLATION**
DREHGELENKANORDNUNG EINER ANLAGE ZUM BETRIEB VON FLUIDEN, INSBESONDERE AUF EINER OFFSHORE-PLATTFORM, UND EINE SOLCHE ANLAGE
ROTARY JOINT DEVICE FOR A FLUID EXPLOITATION INSTALLATION, IN PARTICULAR ON AN OFFSHORE PLATFORM, AND SUCH AN INSTALLATION

(30) Priorité: 12.07.2022 FR 2207175
(43) Date de publication de la demande: 17.01.2024
(73) Titulaire: ETI Group, 13420 Gémenos (FR)
(72) Inventeur: MENARDO, Philippe, 06310 Beaulieu-sur-Mer (FR); SALMON LEGAGNEUR, Damien, 13290 AIX-EN-PROVENCE (FR); GAUDUIN, Antoine, 83136 FORCALQUEIRET (FR)
(74) Mandataire: Santarelli

(56) Documents cités:
- EP-A1- 0 954 715
- EP-A1- 3 460 296
- EP-A1- 3 719 374
- US-A- 4 828 292
- US-A1- 2019 112 890

## Description

### Domaine technique de l'invention

L'invention concerne les installations d'exploitation de fluides, par exemple d'hydrocarbures ou autres sur des plateformes du type offshore, et notamment les dispositifs joint tournant utilisés dans de telles installations.

### Etat de la technique

Les dispositifs joint tournant installés dans des installations sous pression peuvent trouver une application dans le domaine de l'offshore, dont par exemple dans les navires de production pétrolières, permettant notamment l'exploitation de champs d'hydrocarbures en mer. Des unités flottantes de production, de stockage et de déchargement peuvent être formées par un navire qui est mobile, du fait de son environnement, autour d'une tourelle d'amarrage qui est géostationnaire. Le navire peut être assujetti temporairement à la tourelle. Les installations peuvent comporter des conduits qui forment un réseau de canalisations subaquatiques et qui permettent une communication fluidique pour le transfert d'un fluide entre le fond de la mer et le navire.

Pour assurer l'étanchéité entre le navire et la tourelle et ainsi assurer l'intégrité du transfert de fluide, les dispositifs joint tournant sont pourvus d'une première partie, dite fixe, assujettie à la tourelle et d'une deuxième partie, dite mobile, assujettie au navire. La deuxième partie des dispositifs joint tournant est donc mobile en rotation par rapport à la première partie des dispositifs joint tournant. Les dispositifs joint tournant sont en outre pourvus de plusieurs organes d'étanchéité dynamique disposés dans des espaces ménagés entre la première partie fixe et la deuxième partie mobile des dispositifs joint tournant. De tels organes d'étanchéité dynamique peuvent comporter par exemple des lèvres ayant pour fonction d'assurer l'étanchéité face au fluide.

On connaît de la demande de brevet EP 3 460 296 un organe d'étanchéité dynamique pourvu d'un talon, d'une première lèvre et d'une deuxième lèvre qui s'étendent chacune depuis le talon et en regard l'une de l'autre. L'organe d'étanchéité dynamique est en outre pourvu d'au moins une lèvre additionnelle située au niveau du talon à l'opposé des première et deuxième lèvres. Les première et deuxième lèvres sont configurées pour être énergisées par un premier fluide de sorte à étancher au moins l'une des première et deuxième parties, tandis que l'au moins une lèvre additionnelle est configurée pour être énergisée par un second fluide de sorte à étancher au moins l'autre des première pièce et deuxième pièce.

### Exposé de l'invention

L'invention concerne un dispositif joint tournant d'une installation d'exploitation de fluides, notamment sur une plateforme offshore, qui soit particulièrement performant tout en étant simple, commode et économique.

L'invention a ainsi pour objet, sous un premier aspect, un dispositif joint tournant d'une installation d'exploitation de fluides, notamment sur une plateforme offshore, comportant une première partie annulaire qui est assujettie à une tourelle d'amarrage fixe de ladite installation, une deuxième partie annulaire mobile en rotation autour d'un axe et par rapport à ladite première partie annulaire et qui est assujettie à un navire mobile de ladite installation, et au moins un organe d'étanchéité dynamique logé à l'intérieur, notamment d'une cavité, d'un espace d'écartement situé entre ladite première partie annulaire et ladite deuxième partie annulaire et pourvu d'un talon et d'au moins une première lèvre qui s'étend en saillie du talon, caractérisé en ce que l'une de la première partie et de la deuxième partie comporte un logement dans lequel est au moins partiellement reçu le talon et l'autre de la deuxième partie et de la première partie présente une face formant portée qui est ménagée de sorte à être oblique par rapport à l'axe de rotation de ladite deuxième partie annulaire et sur laquelle vient en contact l'au moins une première lèvre.

Dans le dispositif joint tournant selon l'invention, il est ainsi prévu une portée conique pour la première lèvre de l'organe d'étanchéité dynamique.

Le logement du joint et sa portée sont disposés l'un sur la première partie fixe dite géostationnaire du navire et l'autre sur la deuxième partie tournante du navire, autorisant le mouvement relatif des deux parties, qui sont libres en rotation ainsi qu'en translation l'une par rapport à l'autre le long d'un axe commun vertical correspondant à l'axe de rotation du navire ou plus généralement de l'équipement offshore autour de son point d'ancrage géostationnaire.

En d'autres termes, le dispositif joint tournant selon l'invention permet d'obtenir une étanchéité oblique compensant d'éventuelles déformations axiales et/ou radiales par rapport à cet axe de rotation ou en d'autres termes, un espace d'écartement qui varie radialement et/ou axialement.

Des caractéristiques préférées, simples, commodes et économiques du dispositif joint tournant selon l'invention sont présentées ci-après.

L'au moins un organe d'étanchéité dynamique est pourvu d'une deuxième lèvre qui s'étend en saillie du talon et en regard de la première lèvre.

L'au moins un organe d'étanchéité dynamique est configuré de sorte que la première lèvre et la deuxième lèvre définissent un angle d'ouverture correspondant à un angle d'inclinaison de la face formant portée par rapport à l'axe de rotation.

L'au moins un organe d'étanchéité dynamique présente un angle d'ouverture compris entre environ 20° et environ 60°.

Cela permet d'offrir une répartition optimale des déformations dans la direction axiale, radiale et dans la combinaison des deux.

L'au moins un organe d'étanchéité dynamique comporte un organe de compression logé entre la première lèvre et la deuxième lèvre.

Le logement est agencé de sorte que le talon est reçu dans une position globalement parallèle à l'axe de rotation et la première lèvre s'étend de manière inclinée par rapport au talon et en direction de la face formant portée.

Le logement est agencé de sorte que le talon est reçu dans une position globalement inclinée par rapport à l'axe de rotation et en direction de la face formant portée et la première lèvre s'étend globalement au droit du talon.

Le dispositif joint tournant comporte au moins une chambre de transfert au moins partiellement ménagée dans ladite première partie annulaire et/ou dans ladite deuxième partie annulaire pour permettre le transfert dudit fluide au travers dudit dispositif joint tournant, avec le dit au moins un espace d'écartement qui est situé entre ladite première partie annulaire et ladite deuxième partie annulaire et qui débouche dans ladite au moins une chambre de transfert, et avec le logement et la face formant portée qui sont ménagés à proximité de la chambre de transfert.

La première partie annulaire est pourvue d'un premier anneau de guidage et la deuxième partie annulaire est pourvue d'un deuxième anneau de guidage, le dispositif joint tournant est pourvu d'un mécanisme de guidage en rotation de la deuxième partie annulaire par rapport à la première partie annulaire, lequel mécanisme de guidage est logé dans une cavité de guidage ménagée entre le premier anneau de guidage et le deuxième anneau de guidage, et l'au moins un organe d'étanchéité est logé dans une cavité d'étanchéité prolongeant l'espace d'écartement et ménagée aussi entre le premier anneau de guidage et le deuxième anneau de guidage, avec le logement et la face formant portée qui sont ménagés dans la cavité d'étanchéité.

Le premier anneau de guidage de la première partie annulaire peut être pourvu d'une première pièce montée dans la cavité d'étanchéité et présentant la face formant portée sur laquelle vient en contact l'au moins une première lèvre, et le deuxième anneau de guidage de la deuxième partie annulaire peut être pourvu d'une deuxième pièce montée dans la cavité d'étanchéité, en regard de la première pièce, et comportant le logement dans lequel est au moins partiellement reçu le talon.

Les première et deuxième pièces peuvent être assujetties mécaniquement dans la cavité d'étanchéité, respectivement aux premier et deuxième anneaux de guidage.

L'au moins une des première et deuxième pièces peut être assujettie par vissage à l'au moins un des premier et deuxième anneaux de guidage respectifs.

L'au moins une des première et deuxième pièces peut être réalisée en matière plastique.

L'au moins un organe d'étanchéité dynamique peut être formé en une seule pièce avec la deuxième pièce du deuxième anneau de guidage de la deuxième partie annulaire.

L'invention a aussi pour objet, sous un autre aspect, une installation d'exploitation de fluides, par exemple un hydrocarbure et notamment sur une plateforme offshore, comportant au moins un dispositif joint tournant tel que décrit ci-dessus.

### Brève description des figures

On va maintenant poursuivre l'exposé de l'invention par la description d'exemples de réalisation, donnée ci-après à titre illustratif et non limitatif, en référence aux dessins annexés.
La figure 1 représente schématiquement et partiellement une installation d'exploitation de fluides sur une plateforme offshore, pourvue d'un navire, d'une tourelle d'amarrage, d'un réseau de canalisations subaquatiques permettant une communication fluidique pour le transfert du fluide entre le fond de la mer et le navire, et d'un dispositif joint tournant assurant l'étanchéité entre le navire et la tourelle et l'intégrité du transfert de fluides.
La figure 2 est une vue de dessus du dispositif joint tournant de l'installation illustrée sur la figure 1.
La figure 3 est une vue partielle en coupe du dispositif joint tournant, repérée III-III sur la figure 2.
La figure 4 montre en coupe et plus en détail un dispositif joint tournant tel que visible sur la figure 3, dans une première configuration.
La figure 5 est une vue similaire à celle de la figure 4, montrant le dispositif joint tournant dans une deuxième configuration.
La figure 6 est une vue de détail de la figure 5, montrant en particulier un organe d'étanchéité dynamique du dispositif joint tournant.
La figure 7 est une vue similaire à celle de la figure 6, montrant une variante de réalisation de l'organe d'étanchéité dynamique du dispositif joint tournant.
La figure 8 est une vue similaire à celle des figures 6 et 7, montrant une autre variante de réalisation de l'organe d'étanchéité dynamique du dispositif joint tournant.

### Description détaillée

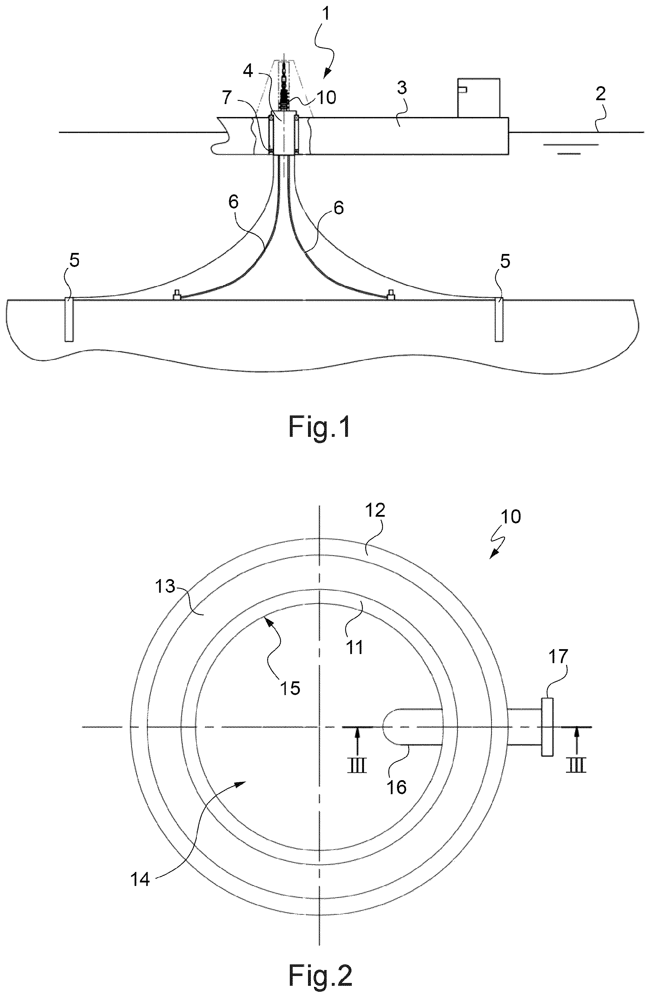

La figure 1 illustre une installation d'exploitation de fluides 1 sur une plateforme offshore, permettant l'exploitation de champs d'hydrocarbures en mer 2.

Cette installation 1, aussi appelée unité flottante de production, de stockage et de déchargement, peut être pourvue d'un navire 3 qui est mobile, du fait de son environnement formé par la mer 2, et d'une tourelle d'amarrage 4 qui est géostationnaire et autour de laquelle le navire 3 est mobile.

La tourelle d'amarrage 4 peut par exemple être assujettie mécaniquement au fond de la mer 2 via des ancres sous-marines 5.

Le navire 3 peut être mobile vis-à-vis de la tourelle d'amarrage 4 par le biais d'un mécanisme à roulements 7.

L'installation 1 peut être pourvue de conduits 6 qui forment un réseau de canalisations subaquatiques permettant une communication fluidique pour le transfert du fluide entre le fond de la mer et le navire 3.

Le fluide circulant dans les conduits 6 provient du fond de la mer 2.

L'installation 1 comporte un dispositif joint tournant 10 assurant l'étanchéité entre le navire 3 et la tourelle d'amarrage 4 et l'intégrité du transfert de fluides.

Le dispositif joint tournant 10 peut être formé d'un joint tournant (« *swivel device* » en terminologie anglo-saxonne) ou d'un empilement de tels joints (« *swivel stack device* » en terminologie anglo-saxonne).

Ainsi qu'illustré sur la figure 2, un tel dispositif joint tournant 10 est globalement annulaire et comporte une première partie annulaire 11, dite fixe, qui est configurée pour être assujettie à la tourelle d'amarrage 4, ainsi qu'une deuxième partie annulaire 12, dite mobile, qui est configurée pour être assujettie au navire 3.

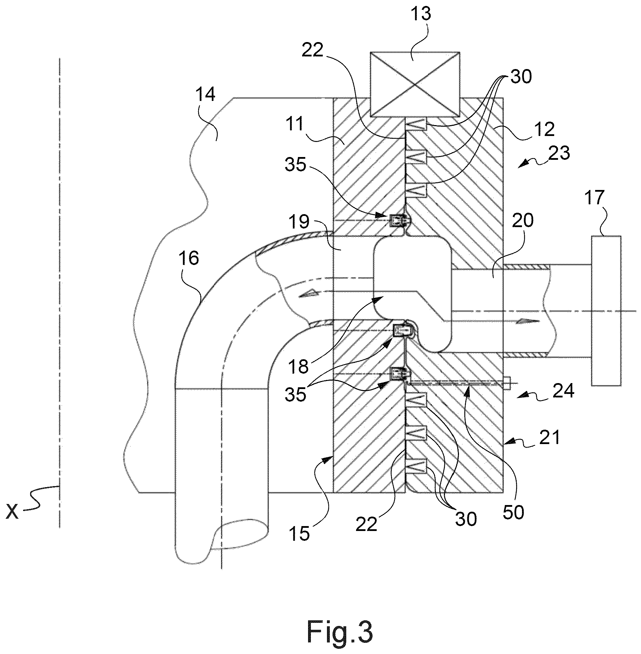

Dans l'exemple décrit, la deuxième partie annulaire 12 est mobile en rotation autour d'un axe de rotation X (figure 3) et par rapport à la première partie annulaire 11, par l'intermédiaire d'un mécanisme de guidage, du type par exemple organe à roulements 13, interposé entre les première et deuxième parties annulaires 11 et 12.

Le dispositif joint tournant 10 présente un espace interne 14 défini ici par une surface interne 15 de la première partie annulaire 11.

L'installation 1 comporte en outre un conduit de transfert 16 raccordé, directement ou indirectement, à au moins un des conduits subaquatiques 6.

Le conduit de transfert 16 entre dans le dispositif joint tournant 10 par son espace interne 14 et débouche à l'extérieur du dispositif joint tournant 10 par un raccord de sortie 17.

Le conduit de transfert 16 traverse ainsi le dispositif joint tournant 10 en entrant dans la première partie annulaire 11 et en sortant par la deuxième partie annulaire 12.

La figure 3 montre en coupe le dispositif joint tournant 10 de la figure 2 et illustre plus en détail le chemin fluidique au travers du dispositif joint tournant 10 et la coopération entre les première et deuxième parties annulaires 11 et 12.

Le dispositif joint tournant 10 est pourvu d'une chambre de transfert 18 formée partiellement par un premier orifice 19 ménagé dans la première partie annulaire 11 et par un deuxième orifice 20 ménagé dans la deuxième partie annulaire 12 et au moins partiellement en regard du premier orifice 19.

La chambre de transfert 18 est ici annulaire, ou toroïdale.

Le premier orifice 19 débouche au niveau de la surface interne 15 de la première partie annulaire 11 dans une première portion du conduit de transfert 16 située dans l'espace interne 14 du dispositif joint tournant 10 et qui est raccordée aux conduits subaquatiques 6.

Le deuxième orifice 20 débouche au niveau d'une surface externe 21 de la deuxième partie annulaire 12 dans une deuxième portion du conduit de transfert 16 située à l'extérieur du dispositif joint tournant 10 et qui comporte le raccord de sortie 17.

Une flèche illustrée sur la figure 3 montre le chemin fluidique emprunté par le fluide venant des conduits 6 et acheminé par le conduit de transfert 16 en traversant les première et deuxième parties annulaire 11 et 12 du dispositif joint tournant 10, jusqu'au raccord de sortie 17.

Le dispositif joint tournant 10 est en outre pourvu d'un espace d'écartement 22 situé entre la première partie annulaire 11 et la deuxième partie annulaire 12.

L'espace d'écartement 22 est prévu pour permettre la rotation de la deuxième partie annulaire 12 par rapport à la première partie annulaire 11.

Dans l'exemple décrit, l'espace d'écartement 22 est interrompu par la chambre de transfert 18.

Ainsi, sur une portion supérieure 23 du dispositif joint tournant 10, l'espace d'écartement 22 s'étend depuis l'organe à roulements 13 jusqu'à déboucher dans la chambre de transfert 18 ; tandis que sur une portion inférieure 24 du dispositif joint tournant 10, l'espace d'écartement 22 débouche à une extrémité dans la chambre de transfert 18 et débouche à une extrémité opposée à l'extérieur du dispositif joint tournant 10.

La chambre de transfert 18 est ici interposée entre les portions supérieure et inférieure 23 et 24.

En particulier, l'espace d'écartement 22 est ménagé entre une surface externe de la première partie annulaire 11, laquelle surface externe est opposée à sa surface interne 15, et une surface interne de la deuxième partie annulaire 12, laquelle surface interne est opposée à sa surface externe 21.

Le dispositif joint tournant 10 comporte des organes d'étanchéité dynamique 30 logés au moins partiellement à l'intérieur de l'espace d'écartement 22, dans les portions supérieure et inférieure 23 et 24 du dispositif joint tournant 10.

Ces organes d'étanchéité dynamique 30 sont prévus pour étancher l'espace d'écartement 22.

Ces organes d'étanchéité dynamique 30 peuvent comporter par exemple des lèvres ayant pour fonction d'assurer l'étanchéité face au fluide (voir en détail ci-après).

Dans l'exemple illustré sur la figure 3, il y a trois organes d'étanchéité dynamique 30 sont logés au moins partiellement à l'intérieur de l'espace d'écartement 22 dans la portion supérieure 23 du dispositif joint tournant 10, dont l'un au niveau de l'organe à roulements 13, et trois organes d'étanchéité dynamique 30 sont logés au moins partiellement à l'intérieur de l'espace d'écartement 22 dans la portion inférieure 24 du dispositif joint tournant 10.

Le dispositif joint tournant 10 comporte ici en outre plusieurs dispositifs de protection 35 des organes d'étanchéité dynamique 30.

En variante, il pourrait y en avoir plus ou moins et par nécessairement le même nombre dans les portions supérieure et inférieure.

Dans l'exemple décrit, un dispositif de protection 35 est logé au moins partiellement à l'intérieur de l'espace d'écartement 22 dans la portion supérieure 23 du dispositif joint tournant 10 et deux dispositifs de protection 35 sont logés au moins partiellement à l'intérieur de l'espace d'écartement 22 dans la portion inférieure 24 du dispositif joint tournant 10.

Le dispositif joint tournant 10 peut aussi comporter un dispositif de nettoyage 50 configuré pour évacuer des débris que peut comporter ledit fluide et qui est ici formé par un canal formé dans la deuxième partie annulaire 12 et qui débouche dans l'espace d'écartement 22 au niveau d'un dispositif de protection 35.

En variante, il pourrait y avoir plus ou moins de dispositifs de protection et/ou de dispositif de nettoyage, ou ne pas en avoir.

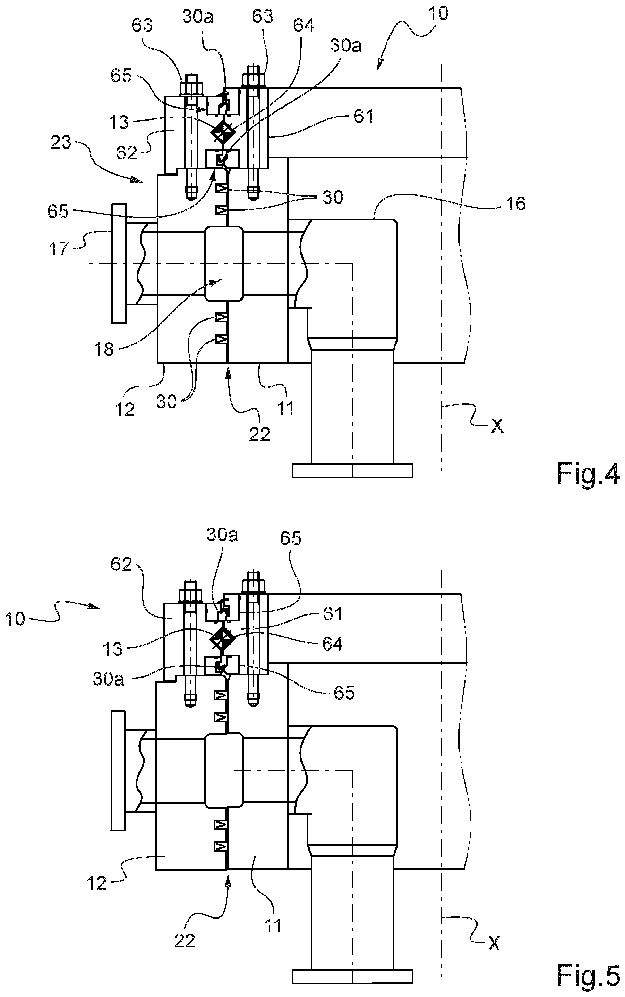

Les figures 4 à 6 montrent certains détails en particulier de la portion supérieure 23 du dispositif joint tournant 10, dans une première et dans une deuxième configuration.

Le dispositif joint tournant 10 est ici inversé par rapport à la figure 3, avec le raccord de sortie 17 qui se trouve sur la gauche des figures 4 et 5 plutôt que sur la droite de la figure 3.

Les première et deuxième parties annulaires 11 et 12 sont donc elles-aussi inversées.

En particulier, sur les figures 4 et 5, la première partie annulaire 11 est pourvue d'un premier anneau de guidage 61 et la deuxième partie annulaire 12 est pourvue d'un deuxième anneau de guidage 62.

Le premier anneau de guidage 61 est assujetti mécaniquement sur le reste de la première partie annulaire 11 au niveau de la portion supérieure 23, ici par un système vis-écrou 63.

Le deuxième anneau de guidage 62 est assujetti mécaniquement sur le reste de la première partie annulaire 12 au niveau de la portion supérieure 23, ici aussi par un même système vis-écrou 63.

L'espace d'écartement 22 se prolonge depuis la portion supérieure 23 entre le premier anneau de guidage 61 et le deuxième anneau de guidage 62.

Le mécanisme de guidage formé par l'organe à roulements 13 est logé dans une cavité de guidage 64 ménagée entre le premier anneau 61 de guidage et le deuxième anneau de guidage 62.

L'organe à roulements 13 comporte par exemple ici des roulements à rouleaux croisés.

Dans l'exemple illustré, deux cavités d'étanchéité 65 prolongeant l'espace d'écartement 22 sont ménagées aussi entre le premier anneau de guidage 61 et le deuxième anneau de guidage 62.

Les deux cavités d'étanchéité 65 sont disposées de part et d'autre de la cavité de guidage 64.

Un organe d'étanchéité dynamique 30a est logé dans chacune des cavités d'étanchéité 65.

Dans l'exemple illustré, les organes d'étanchéité dynamique 30a diffèrent des organes d'étanchéité dynamique 30 en ce qu'ils sont particulièrement adaptés à étancher le dispositif joints tournants malgré des déformations axiales et/ou radiales par rapport à l'axe de rotation X ou, en d'autres termes, malgré une variation radiale et/ou axiale de l'espace d'écartement 22 causées par un écartement et/ou un glissement de la première partie annulaire 11 par rapport à la deuxième partie annulaire 12.

C'est ce qui est représenté par la figure 4 où le dispositif joint tournant 10 se trouve dans sa première configuration, dite ici de référence, avec un espace d'écartement dit de référence et la figure 5 où le dispositif joint tournant 10 se trouve dans sa deuxième configuration dans laquelle l'espace d'écartement a varié radialement et axialement par rapport à l'espace d'écartement dit de référence.

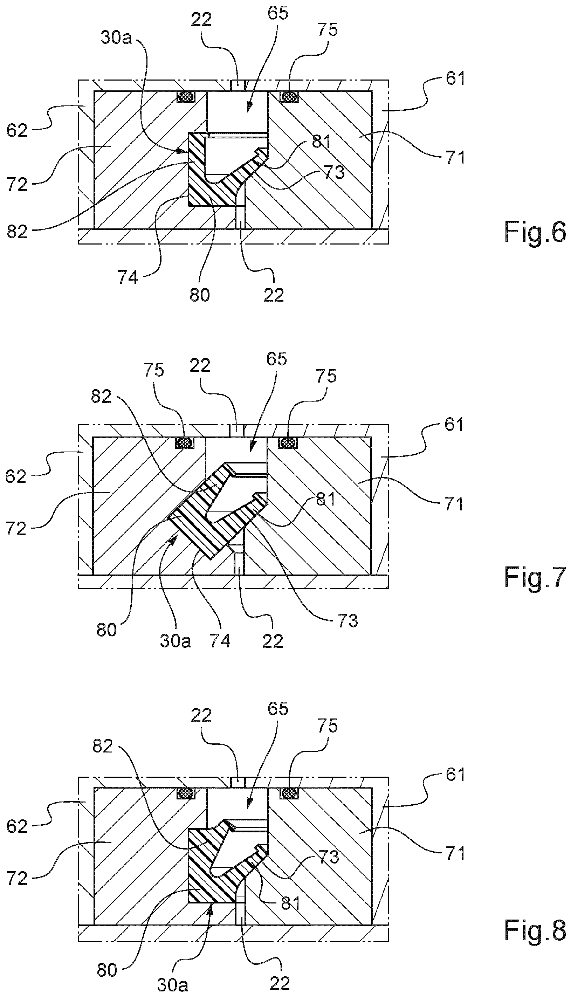

La figure 6 montre plus en détail un organe d'étanchéité dynamique 30a logé dans une cavité d'étanchéité 65.

De part et d'autre de la cavité d'étanchéité 65 s'étend l'espace d'écartement 22.

Le premier anneau de guidage 61 de la première partie annulaire est ici pourvu d'une première pièce 71 montée dans la cavité d'étanchéité 65 et présentant ici une face formant portée 73.

Le deuxième anneau de guidage 62 de la deuxième partie annulaire est ici pourvu d'une deuxième pièce 72 montée dans la cavité d'étanchéité 65, en regard de la première pièce 71, et comportant un logement 74.

Les première et deuxième pièces 71 et 72 sont assujetties mécaniquement dans la cavité d'étanchéité 65, respectivement aux premier et deuxième anneaux de guidage 61 et 62.

Un joint torique 75 est ici interposé entre les première et deuxième pièces 71 et 72 dans la cavité d'étanchéité 65 et les premier et deuxième anneaux de guidage 61 et 62.

Le logement 74 formé dans la deuxième pièce 72 s'étend globalement parallèlement à un axe passant par l'espace d'écartement 22 et la cavité d'étanchéité 65 et qui est parallèle à l'axe de rotation (non visible sur la figure 6).

La face formant portée 73 qui est formée, par exemple par usinage, dans la deuxième pièce 71 et ménagée de sorte à être oblique par rapport à ce même axe parallèle à l'axe de rotation.

En particulier, dans l'exemple illustré, la face formant portée 73 est inclinée d'environ 45 °.

L'organe d'étanchéité dynamique 30a est quant à lui pourvu d'un talon 80, d'une première lèvre 81 qui s'étend en saillie du talon 80 et d'une deuxième lèvre 82 qui s'étend aussi en saillie du talon 80 et en regard de la première lèvre 81.

Dans l'exemple illustré, l'organe d'étanchéité dynamique 30a présente un angle d'ouverture défini entre la première lèvre 81 et la deuxième lèvre 82 qui est égal à environ 45 °.

Sur la figure 6, le talon 80 est reçu dans le logement 74, la deuxième lèvre 82 est elle aussi reçue dans le logement 74, et la première lèvre 81 vient au contact de la face formant portée 73.

Le logement 74 est agencé de sorte que le talon 80 est reçu dans une position globalement parallèle à l'axe de rotation et la première lèvre 81 s'étend de manière inclinée par rapport au talon 80 et en direction de la face formant portée 73.

Cela permet d'offrir une répartition optimale des déformations dans la direction axiale, radiale et dans la combinaison des deux.

On notera que le logement 74 débouche ici directement dans l'espace d'écartement 22 au niveau du talon 80.

Ainsi, l'organe d'étanchéité dynamique 30a est configuré de sorte que la première lèvre 81 et la deuxième lèvre 82 définissent un angle d'ouverture correspondant à un angle d'inclinaison de la face formant portée 73 par rapport à l'axe de rotation.

En d'autres termes, l'organe d'étanchéité dynamique 30a est configuré pour que sa première lèvre 81 reste au contact de la face formant portée 73 malgré d'éventuels déplacements radiaux et/ou axiaux de l'une et/ou l'autre des première et deuxième pièces 71 et 72, générés par ces mêmes déplacements des premier et deuxième anneaux de guidage 61 et 62 et plus généralement des première et deuxième parties annulaires.

On notera que sur la figure 6, la deuxième lèvre 82 pourrait être assimilée à une extension du talon 80 puisqu'elle est en grande partie dans le logement 74 et qu'elle est droite de sorte qu'elle ne s'étend pas dans la cavité d'étanchéité 65.

Sur la figure 7, le logement 74 est formé dans la deuxième pièce 72 et s'étend globalement parallèlement à l'axe passant par l'espace d'écartement 22 et la cavité d'étanchéité 65 et qui est parallèle à l'axe de rotation.

La face formant portée 73 qui est ménagée dans la deuxième pièce 71 est ménagée de sorte à être oblique par rapport à ce même axe parallèle à l'axe de rotation.

En particulier, dans l'exemple illustré, la face formant portée 73 est inclinée d'environ 45 °.

L'organe d'étanchéité dynamique 30a est quant à lui pourvu d'un talon 80, d'une première lèvre 81 qui s'étend en saillie du talon 80 et d'une deuxième lèvre 82 qui s'étend aussi en saillie du talon 80 et en regard de la première lèvre 81.

Dans l'exemple illustré, l'organe d'étanchéité dynamique 30a présente un angle d'ouverture défini entre la première lèvre 81 et la deuxième lèvre 82 qui est égal à environ 20 °.

Sur la figure 7, le talon 80 est reçu dans le logement 74 et la première lèvre 81 vient en au contact de la face formant portée 73.

La deuxième lèvre 82 est partiellement reçue dans le logement 74 et elle s'étend de manière inclinée dans la cavité d'étanchéité 65, sensiblement en regard de la première lèvre 81.

Le logement 74 est agencé de sorte que le talon 80 est reçu dans une position globalement parallèle à l'axe de rotation et la première lèvre 81 et la deuxième lèvre 82 s'étendent de manière inclinée par rapport au talon 80.

La première lèvre 81 s'étend en direction de la face formant portée 73, tandis que la deuxième lèvre 82 s'étend à distance de la première lèvre 81 et de la face formant portée 73.

Cela permet aussi d'offrir une répartition optimale des déformations dans la direction axiale, radiale et dans la combinaison des deux.

L'organe d'étanchéité dynamique 30a est configuré de sorte que la première lèvre 81 et la deuxième lèvre 82 définissent un angle d'ouverture inférieur à l'angle d'inclinaison de la face formant portée 73 par rapport à l'axe de rotation.

L'organe d'étanchéité dynamique 30a est configuré pour que sa première lèvre 81 reste au contact de la face formant portée 73 malgré d'éventuels déplacements radiaux et/ou axiaux de l'une et/ou l'autre des première et deuxième pièces 71 et 72, générés par ces mêmes déplacements des premier et deuxième anneaux de guidage 61 et 62 et plus généralement des première et deuxième parties annulaires.

Sur la figure 8, le logement 74 est formé dans la deuxième pièce 72 et s'étend de manière inclinée par rapport à l'axe passant par l'espace d'écartement 22 et la cavité d'étanchéité 65 et qui est parallèle à l'axe de rotation.

La face formant portée 73 qui est ménagée dans la deuxième pièce 71 est ménagée de sorte à être oblique par rapport ce même axe parallèle à l'axe de rotation.

En particulier, dans l'exemple illustré, la face formant portée 73 est inclinée d'environ 45 °.

L'organe d'étanchéité dynamique 30a est quant à lui pourvu d'un talon 80, d'une première lèvre 81 qui s'étend en saillie du talon 80 et d'une deuxième lèvre 82 qui s'étend aussi en saillie du talon 80 et en regard de la première lèvre 81.

La première lèvre 81 et la deuxième lèvre 82 sont globalement droites et s'étendent généralement symétriquement depuis le talon 80.

Dans l'exemple illustré, l'organe d'étanchéité dynamique 30a présente un angle d'ouverture défini entre la première lèvre 81 et la deuxième lèvre 82 qui est égal à environ 20 °.

Sur la figure 8, le talon 80 est reçu dans le logement 74 et la première lèvre 81 vient au contact de la face formant portée 73.

La deuxième lèvre 82 s'étend de manière inclinée dans la cavité d'étanchéité 65, en regard de la première lèvre 81.

Le logement 74 est agencé de sorte que le talon 80 est reçu dans une position globalement inclinée par rapport à l'axe de rotation et en direction de la face formant portée 73 et la première lèvre 81 et la deuxième lèvre 82 s'étendent globalement au droit du talon 80.

La première lèvre 81 s'étend en direction de la face formant portée 73, tandis que la deuxième lèvre 82 s'étend à distance de la première lèvre 81 et de la face formant portée 73.

Cela permet aussi d'offrir une répartition optimale des déformations dans la direction axiale, radiale et dans la combinaison des deux.

L'organe d'étanchéité dynamique 30a est configuré de sorte que la première lèvre 81 et la deuxième lèvre 82 définissent un angle d'ouverture inférieur à l'angle d'inclinaison de la face formant portée 73 par rapport à l'axe de rotation.

L'organe d'étanchéité dynamique 30a est configuré pour que sa première lèvre 81 reste au contact de la face formant portée 73 malgré d'éventuels déplacements radiaux et/ou axiaux de l'une et/ou l'autre des première et deuxième pièces 71 et 72, générés par ces mêmes déplacements des premier et deuxième anneaux de guidage 61 et 62 et plus généralement des première et deuxième parties annulaires.

Dans les exemples de réalisation décrits en référence aux figures 6 à 8, les premières et deuxième lèvres définissent entre elles un espace et elles sont chacune pourvues d'un rebord d'extrémité.

Dans une variante non illustrée, l'organe d'étanchéité dynamique peut comporter un ressort de précontrainte logé dans l'espace entre premières et deuxième lèvres. Il peut s'agir par exemple d'un ressort à lame pourvu de deux branches raccordées l'une à l'autre par une portion de jonction. La portion de jonction du ressort repose au fond de l'espace contre le talon tandis que les branches viennent respectivement en appui contre des faces internes des première et deuxième lèvres.

Dans une autre variante non illustrée, le logement et la face formant portée sont ménagés à proximité de la chambre de transfert plutôt que dans le premier anneau et dans deuxième à proximité du mécanisme de guidage.

Dans le dispositif joint tournant tel que décrit ci-dessus, il est ainsi prévu une portée conique pour la première lèvre de l'organe d'étanchéité dynamique.

Le logement du joint et sa portée sont disposés l'un sur la première partie fixe dite géostationnaire du navire et l'autre sur la deuxième partie tournante du navire, autorisant le mouvement relatif des deux parties, qui sont libres en rotation ainsi qu'en translation l'une par rapport à l'autre le long d'un axe commun vertical correspondant à l'axe de rotation du navire ou plus généralement de l'équipement offshore autour de son point d'ancrage géostationnaire.

En d'autres termes, le dispositif joint tournant permet d'obtenir une étanchéité oblique compensant d'éventuelles déformations axiales et/ou radiales par rapport à cet axe de rotation ou en d'autres termes, un espace d'écartement qui varie radialement et/ou axialement.

D'autres variantes non illustrées sont décrites ci-dessous.

L'inclinaison de la face formant portée est plus généralement comprise entre environ 20 et environ 60 °.

L'organe d'étanchéité dynamique peut présenter un angle d'ouverture plus généralement compris entre environ 20° et environ 60°.

Le logement recevant le talon peut être formé dans la première partie annulaire plutôt que dans la deuxième partie annulaire, et la face formant portée inclinée peut être ménagée dans la deuxième partie annulaire plutôt que dans la première partie annulaire.

L'organe d'étanchéité dynamique peut être dépourvu de deuxième lèvre.

L'au moins une des première et deuxième pièces peut être assujettie par vissage à l'au moins un des premier et deuxième anneaux de guidage respectifs.

L'au moins une des première et deuxième pièces peut être réalisée en matière plastique.

L'au moins un organe d'étanchéité dynamique peut être formé en une seule pièce avec la deuxième pièce du deuxième anneau de guidage de la deuxième partie annulaire.

Le dispositif joint tournant peut comporter plus ou moins de conduits entrant et/ou sortant.

Les conduites peuvent cheminer des fluides, des signaux et/ou de l'énergie par exemple électrique.

Un assemblage de plusieurs dispositifs joint tournant superposés est possible.

Plus généralement, l'invention trouve une application dans les navires ou unités flottantes du domaine de l'offshore permettant la production et/ou la transformation et/ou le traitement et/ou le stockage et/ou le déchargement de fluides et/ou d'énergie notamment électrique et/ou de signaux.

Plus généralement, l'invention ne se limite pas aux exemples décrits et représentés et est uniquement définie par les revendications suivantes.

## Revendications

1. Dispositif joint tournant d'une installation d'exploitation de fluides, notamment sur une plateforme offshore, comportant une première partie annulaire (11) qui est assujettie à une tourelle d'amarrage (4) fixe de ladite installation (1), une deuxième partie annulaire (12) mobile en rotation autour d'un axe (X) et par rapport à ladite première partie annulaire (11) et qui est assujettie à un navire (3) mobile de ladite installation, et au moins un organe d'étanchéité dynamique (30a) logé à l'intérieur d'un espace d'écartement (22) situé entre ladite première partie annulaire et ladite deuxième partie annulaire et pourvu d'un talon (80) et d'au moins une première lèvre (81) qui s'étend en saillie du talon, **caractérisé en ce que** l'une de la première partie et de la deuxième partie comporte un logement (74) dans lequel est au moins partiellement reçu le talon (80) et l'autre de la deuxième partie et de la première partie présente une face formant portée (73) qui est ménagée de sorte à être oblique par rapport à l'axe (X) de rotation de ladite deuxième partie annulaire et sur laquelle vient en contact l'au moins une première lèvre (81).

2. Dispositif joint tournant selon la revendication 1, **caractérisé en ce que** l'au moins un organe d'étanchéité dynamique (30a) est pourvu d'une deuxième lèvre (82) qui s'étend en saillie du talon (80) et en regard de la première lèvre (81).

3. Dispositif joint tournant selon la revendication 2, **caractérisé en ce que** l'au moins un organe d'étanchéité dynamique (30a) est configuré de sorte que la première lèvre (81) et la deuxième lèvre (82) définissent un angle d'ouverture correspondant à un angle d'inclinaison de la face formant portée (73) par rapport à l'axe (X) de rotation.

4. Dispositif joint tournant selon la revendication 3, **caractérisé en ce que** l'au moins un organe d'étanchéité dynamique (30a) présente un angle d'ouverture compris entre environ 20° et environ 60°.

5. Dispositif joint tournant selon l'une quelconque des revendications 2 à 4, **caractérisé en ce que** l'au moins un organe d'étanchéité dynamique (30a) comporte un organe de compression logé entre la première lèvre et la deuxième lèvre.

6. Dispositif joint tournant selon l'une quelconque des revendications 1 à 5, **caractérisé en ce que** le logement (74) est agencé de sorte que le talon (80) est reçu dans une position globalement parallèle à l'axe (X) de rotation et la première lèvre (81) s'étend de manière inclinée par rapport au talon (80) et en direction de la face formant portée (73).

7. Dispositif joint tournant selon l'une quelconque des revendications 1 à 5, **caractérisé en ce que** le logement (74) est agencé de sorte que le talon (80) est reçu dans une position globalement inclinée par rapport à l'axe (X) de rotation et en direction de la face formant portée (73) et la première lèvre (81) s'étend globalement au droit du talon (80).

8. Dispositif joint tournant selon l'une quelconque des revendications 1 à 7, **caractérisé en ce qu'**il comporte au moins une chambre de transfert (18) au moins partiellement ménagée dans ladite première partie annulaire (11) et/ou dans ladite deuxième partie annulaire (12) pour permettre le transfert dudit fluide au travers dudit dispositif joint tournant (10), avec le dit au moins un espace d'écartement (22) qui est situé entre ladite première partie annulaire et ladite deuxième partie annulaire et qui débouche dans ladite au moins une chambre de transfert (18), et avec le logement et la face formant portée qui sont ménagés à proximité de la chambre de transfert.

9. Dispositif joint tournant selon l'une quelconque des revendications 1 à 8, **caractérisé en ce que** la première partie annulaire (11) est pourvue d'un premier anneau de guidage (61) et la deuxième partie annulaire (12) est pourvue d'un deuxième anneau de guidage (62), le dispositif joint tournant (10) est pourvu d'un mécanisme de guidage en rotation de la deuxième partie annulaire par rapport à la première partie annulaire, lequel mécanisme de guidage est logé dans une cavité de guidage (64) ménagée entre le premier anneau de guidage et le deuxième anneau de guidage, et l'au moins un organe d'étanchéité (30a) est logé dans une cavité d'étanchéité (65) prolongeant l'espace d'écartement (22) et ménagée aussi entre le premier anneau de guidage et le deuxième anneau de guidage, avec le logement (74) et la face formant portée (73) qui sont ménagés dans la cavité d'étanchéité (65).

10. Dispositif joint tournant selon la revendication 9, **caractérisé en ce que** le premier anneau de guidage (61) de la première partie annulaire (11) est pourvu d'une première pièce (71) montée dans la cavité d'étanchéité (65) et présentant la face formant portée (73) sur laquelle vient en contact l'au moins une première lèvre (81), et le deuxième anneau de guidage (62) de la deuxième partie annulaire (12) est pourvu d'une deuxième pièce (72) montée dans la cavité d'étanchéité (65), en regard de la première pièce (71), et comportant le logement (74) dans lequel est au moins partiellement reçu le talon (80).

11. Dispositif joint tournant selon la revendication 10, **caractérisé en ce que** les première et deuxième pièces (71, 72) sont assujetties mécaniquement dans la cavité d'étanchéité (65), respectivement aux premier et deuxième anneaux de guidage (61, 62).

12. Dispositif joint tournant selon la revendication 11, **caractérisé en ce que** l'au moins une des première et deuxième pièces (71, 72) est assujettie par vissage à l'au moins un des premier et deuxième anneaux de guidage (61, 62) respectifs.

13. Dispositif joint tournant selon l'une quelconque des revendications 10 à 12, **caractérisé en ce que** l'au moins une des première et deuxième pièces (71, 72) est réalisée en matière plastique.

14. Dispositif joint tournant selon l'une quelconque des revendications 10 à 13, **caractérisé en ce que** l'au moins un organe d'étanchéité dynamique (30a) est formé en une seule pièce avec la deuxième pièce (72) du deuxième anneau de guidage (62) de la deuxième partie annulaire (12).

15. Installation d'exploitation de fluides, dont par exemple un hydrocarbure et notamment sur une plateforme offshore, comportant un dispositif joint tournant (10a, 10b) selon l'une quelconque des revendications 1 à 14.

## Patentansprüche

1. Drehgelenkvorrichtung einer Anlage zum Betrieb von Fluiden, insbesondere auf einer Offshore-Plattform, die einen ersten ringförmigen Teil (11), der an einem festen Ankerturm (4) der Anlage (1) befestigt ist, einen zweiten ringförmigen Teil (12), der um eine Achse (X) und in Bezug auf den ersten ringförmingen Teil (11) drehbeweglich ist und an einem beweglichen Schiff (3) der Anlage befestigt ist, und mindestens ein dynamisches Dichtungselement (30a), das in einem Abstandsraum (22) zwischen dem ersten ringförmigen Teil und dem zweiten ringförmigen Teil untergebracht ist und mit einem Absatz (80) und mindestens einer ersten Lippe (81) versehen ist, die sich vom Absatz aus vorstehend erstreckt, aufweist, **dadurch gekennzeichnet, dass** einer des ersten Teils und des zweiten Teils eine Aufnahme (74) aufweist, in der der Absatz (80) mindestens teilweise aufgenommen wird und der andere des zweiten Teils und des ersten Teils eine Auflagefläche (73) besitzt, die so ausgebildet ist, dass sie in Bezug auf die Drehachse (X) des zweiten ringförmigen Teils schräg ist, und mit der die mindestens eine erste Lippe (81) in Kontakt kommt.

2. Drehgelenkvorrichtung nach Anspruch 1, **dadurch gekennzeichnet, dass** das mindestens eine dynamische Dichtungselement (30a) mit einer zweiten Lippe (82) versehen ist, die sich vom Absatz (80) aus vorstehend und gegenüber der ersten Lippe (81) erstreckt.

3. Drehgelenkvorrichtung nach Anspruch 2, **dadurch gekennzeichnet, dass** das mindestens eine dynamische Dichtungselement (30a) so eingerichtet ist, dass die erste Lippe (81) und die zweite Lippe (82) einen Öffnungswinkel definieren, der einem Neigungswinkel der Auflagefläche (73) in Bezug auf die Drehachse (X) entspricht.

4. Drehgelenkvorrichtung nach Anspruch 3, **dadurch gekennzeichnet, dass** das mindestens eine dynamische Dichtungselement (30a) einen Öffnungswinkel zwischen etwa 20° und etwa 60° aufweist.

5. Drehgelenkvorrichtung nach einem der Ansprüche 2 bis 4, **dadurch gekennzeichnet, dass** das mindestens eine dynamische Dichtungselement (30a) ein Druckelement aufweist, das zwischen der ersten Lippe und der zweiten Lippe untergebracht ist.

6. Drehgelenkvorrichtung nach einem der Ansprüche 1 bis 5, **dadurch gekennzeichnet, dass** die Aufnahme (74) so angeordnet ist, dass der Absatz (80) in einer insgesamt parallel zu der Drehachse (X) liegenden Position aufgenommen wird und die erste Lippe (81) sich schräg in Bezug auf den Absatz (80) und in Richtung der Auflagefläche (73) erstreckt.

7. Drehgelenkvorrichtung nach einem der Ansprüche 1 bis 5, **dadurch gekennzeichnet, dass** die Aufnahme (74) so angeordnet ist, dass der Absatz (80) in einer insgesamt geneigten Position in Bezug auf die Drehachse (X) und in Richtung der Auflagefläche (73) aufgenommen wird und sich die erste Lippe (81) im Wesentlichen in Höhe des Absatzes (80) erstreckt.

8. Drehgelenkvorrichtung nach einem der Ansprüche 1 bis 7, **dadurch gekennzeichnet, dass** sie mindestens eine Transferkammer (18) umfasst, die mindestens teilweise in dem ersten ringförmigen Teil (11) und/oder in dem zweiten ringförmigen Teil (12) ausgebildet ist, um den Transfer des Fluids durch die Drehgelenkvorrichtung (10) mit dem mindestens einen Abstandsraum (22) zu ermöglichen, der sich zwischen dem ersten ringförmigen Teil und dem zweiten ringförmigen Teil befindet und in den mindestens eine Transferkammer (18) mündet, und mit der Aufnahme und der Auflagefläche, die in der Nähe der Transferkammer ausgebildet sind.

9. Drehgelenkvorrichtung nach einem der Ansprüche 1 bis 8, **dadurch gekennzeichnet, dass** der erste ringförmige Teil (11) mit einem ersten Führungsring (61) versehen ist und der zweite ringförmige Teil (12) mit einem zweiten Führungsring (62) versehen ist, die Drehgelenkvorrichtung (10) mit einem gegenüber dem ersten ringförmigen Teil rotierenden Führungsmechanismus des zweiten ringförmigen Teils versehen ist, welcher in einem Führungshohlraum (64) untergebracht ist, der zwischen dem ersten Führungsring und dem zweiten Führungsring ausgebildet ist, und das mindestens eine Dichtungselement (30a) in einem den Abstandsraum (22) verlängernden Dichtungshohlraum (65) untergebracht ist und auch zwischen dem ersten Führungsring und dem zweiten Führungsring ausgebildet ist, wobei die Aufnahme (74) und die Auflagefläche (73) in dem Dichtungshohlraum (65) ausgebildet sind.

10. Drehgelenkvorrichtung nach Anspruch 9, **dadurch gekennzeichnet, dass** der erste Führungsring (61) des ersten ringförmigen Teils (11) mit einem ersten Teil (71) versehen ist, der in den Dichtungshohlraum (65) montiert ist und die Auflagefläche (73) besitzt, mit der die mindestens eine erste Lippe (81) in Kontakt kommt, und der zweite Führungsring (62) des zweiten ringförmigen Teils (12) mit einem zweiten Teil (72) versehen ist, der in den Dichtungshohlraum (65) gegenüber dem ersten Teil (71) montiert ist und die Aufnahme (74) aufweist, in der der Absatz (80) mindestens teilweise aufgenommen ist.

11. Drehgelenkvorrichtung nach Anspruch 10, **dadurch gekennzeichnet, dass** die ersten und zweiten Teile (71, 72) mechanisch in dem Dichtungshohlraum (65) jeweils an den ersten und zweiten Führungsringen (61, 62) befestigt sind.

12. Drehgelenkvorrichtung nach Anspruch 11, **dadurch gekennzeichnet, dass** das mindestens eine der ersten und zweiten Teile (71, 72) durch Verschrauben an dem mindestens einen der jeweiligen ersten und zweiten Führungsringe (61, 62) befestigt ist.

13. Drehgelenkvorrichtung nach einem der Ansprüche 10 bis 12, **dadurch gekennzeichnet, dass** mindestens eines der ersten und zweiten Teile (71,72) aus Kunststoff hergestellt ist.

14. Drehgelenkvorrichtung nach einem der Ansprüche 10 bis 13, **dadurch gekennzeichnet, dass** das mindestens eine dynamische Dichtungselement (30a) einteilig mit dem zweiten Teil (72) des zweiten Führungsrings (62) des zweiten ringförmigen Teils (12) ausgebildet ist.

15. Anlage zum Betrieb von Fluiden, darunter beispielsweise ein Kohlenwasserstoff und insbesondere auf einer Offshore-Plattform, mit einer Drehgelenkvorrichtung (10a, 10b) nach einem der Ansprüche 1 bis 14.

## Claims

1. A rotary joint device for an installation for fluid exploitation, in particular on an offshore platform, comprising a first annular portion (11) which is secured to a fixed mooring turret (4) of said installation (1), a second annular portion (12) movable in rotation about an axis (X) and relative to said first annular portion (11) and which is secured to a movable vessel (3) of said installation, and at least one dynamic sealing member (30a) housed inside a gap space (22) located between said first annular portion and said second annular portion and provided with a body (80) and at least a first lip (81) which extends protruding from the body, **characterised in that** one of the first portion and the second portion comprises a housing (74) wherein the body (80) is at least partially received and the other of the second portion and the first portion has a face forming a bearing surface (73) which is arranged so as to be oblique relative to the axis (X) of rotation of said second annular portion and whereon the at least a first lip (81) comes into contact.

2. The rotary joint device according to claim 1, **characterised in that** the at least one dynamic sealing member (30a) is provided with a second lip (82) which extends protruding from the body (80) and facing the first lip (81).

3. The rotary joint device according to claim 2, **characterised in that** the at least one dynamic sealing member (30a) is configured such that the first lip (81) and the second lip (82) define an aperture angle corresponding to an inclination angle of the face forming a bearing surface (73) relative to the axis (X) of rotation.

4. The rotary joint device according to claim 3, **characterised in that** the at least one dynamic sealing member (30a) has an aperture angle between about 20° and about 60°.

5. The rotary joint device according to any one of claims 2 to 4, **characterised in that** the at least one dynamic sealing member (30a) comprises a compression member housed between the first lip and the second lip.

6. The rotary joint device according to any one of claims 1 to 5, **characterised in that** the housing (74) is arranged such that the body (80) is received in an overall parallel position to the axis (X) of rotation and the first lip (81) extends in an inclined manner relative to the body (80) and towards the face forming a bearing surface (73).

7. The rotary joint device according to any one of claims 1 to 5, **characterised in that** the housing (74) is arranged such that the body (80) is received in an overall inclined position relative to the axis (X) of rotation and towards the face forming a bearing surface (73) and the first lip (81) extends overall in line with the body (80).

8. The rotary joint device according to any one of claims 1 to 7, **characterised in that** it comprises at least one transfer chamber (18) at least partially arranged in said first annular portion (11) and/or in said second annular portion (12) to make it possible to transfer said fluid through said rotary joint device (10), with said at least one gap space (22) which is located between said first annular portion and said second annular portion and which opens into said at least one transfer chamber (18), and with the housing and the face forming a bearing surface which are arranged in the vicinity of the transfer chamber.

9. The rotary joint device according to any one of claims 1 to 8, **characterised in that** the first annular portion (11) is provided with a first guide ring (61) and the second annular portion (12) is provided with a second guide ring (62), the rotary joint device (10) is provided with a mechanism for guiding the second annular portion in rotation relative to the first annular portion, said guiding mechanism being housed in a guide cavity (64) provided between the first guide ring and the second guide ring, and the at least one sealing member (30a) is housed in a sealing cavity (65) extending the gap space (22) and also provided between the first guide ring and the second guide ring, with the housing (74) and the face forming a bearing surface (73) which are arranged in the sealing cavity (65).

10. The rotary joint device according to claim 9, **characterised in that** the first guide ring (61) of the first annular portion (11) is provided with a first part (71) mounted in the sealing cavity (65) and having the face forming a bearing surface (73) whereon the at least a first lip (81) comes into contact, and the second guide ring (62) of the second annular portion (12) is provided with a second part (72) mounted in the sealing cavity (65), facing the first part (71), and comprising the housing (74) wherein the body (80) is at least partially received.

11. The rotary joint device according to claim 10, **characterised in that** the first and second parts (71, 72) are mechanically connected in the sealing cavity (65), respectively to the first and second guide rings (61, 62).

12. The rotary joint device according to claim 11, **characterised in that** the at least one of the first and second parts (71, 72) is secured by screwing to the at least one of the respective first and second guide rings (61, 62).

13. The rotary joint device according to any one of claims 10 to 12, **characterised in that** the at least one of the first and second parts (71, 72) is made of plastic material.

14. The rotary joint device according to any one of claims 10 to 13, **characterised in that** the at least one dynamic sealing member (30a) is formed of one piece with the second part (72) of the second guide ring (62) of the second annular portion (12).

15. An installation for exploiting fluids, of which for example a hydrocarbon and in particular on an offshore platform, comprising a rotary joint device (10a, 10b) according to any one of claims 1 to 14.
